(19) **Europäisches Patentamt / European Patent Office / Office européen des brevets**

(11) **EP 1 841 239 A1**

(12) **EUROPEAN PATENT APPLICATION**

(43) Date of publication:
**03.10.2007 Bulletin 2007/40**

(51) Int Cl.:
***H04N 17/00*** (2006.01)

(21) Application number: **06006850.9**

(22) Date of filing: **31.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SONY UNITED KINGDOM LIMITED**
**Weybridge,**
**Surrey KT13 0XW (GB)**

(72) Inventor: **Fuchs, Michael**
**82211 Herrsching (DE)**

(74) Representative: **Müller - Hoffmann & Partner**
**Patentanwälte**
**Innere Wiener Strasse 17**
**81667 München (DE)**

(54) **Method for measuring the data quality of an EPG data set**

(57)    The present invention relates to a method for measurring the data quality of an electronic program guide data set. It is a key aspect of the present invention to provide a data quality index (DQI) in dependence upon at least one numerical value which is determined such as to represent a measure for at least one quality feature of at least one entry of said electronic program guide data set as a data quality measure for at least a subset of said electronic program guide data set.

Fig. 1

**Description**

Field of the Invention

The present invention relates to a method for measuring the data quality of an EPG data set. More particular, the present invention relates to a data quality index for EPG data.

Background of the Invention

Nowadays, data of an electronic program guide data base or EPG data set is becoming more and more important for the users of electronic devices such as TV sets, TV recording machines, DVD recorders or the like, in particular if the equipment comprises automatic means for recording certain programs. EPG data may for example be provided for audio content items, audio/video content items, video content items, content items scheduled for broadcast at determined times, content items available on demand, for example by download or streaming using internet protocol.

Summary of the Invention

It is therefore an object underlying the present invention to provide a method for measuring the data quality of an EPG data set automatically and in a manner that is simple to a user or operator to interpret and/or to implement. The object underlying the present invention is achieved by a method for monitoring the data quality of an EPG data set according to independent claim 1. Further aspects of the present invention are the provision of a respective system, a computer program product, and a computer readable storage medium according to independent claims 36, 37, and 38, respectively. Preferred embodiments are within the scope of the respective dependent subclaims.

According to the present invention in its broadest sense a data quality index or DQI is provided which is dependent on and/or which comprises at least one numerical value in order to serve as a quality measure for a quality feature of at least a subset of the EPG data set.

According to the present invention a method for measuring the data quality of an EPG data set is provided wherein a data quality index or DQI is generated in dependence on and/or comprising at least one numerical value, wherein said numerical value is determined such as to represent a measure for at least one quality feature of at least one data entry of said EPG data set, and wherein said data quality index DQI is provided as a data quality measure for at least a subset of said EPG data set.

According to a further aspect of the present invention a system for monitoring the data quality of an EPG data set is provided which is adapted and which comprises means for carrying out a method for monitoring the data quality of an EPG data set according to the present invention.

Further, according to the present invention a computer program product is provided comprising computer program means which is adapted for realizing a method for monitoring the data quality of an EPG data set according to the present invention and the steps thereof when it is executed on a computer.

Also according to the present invention a computer readable storage medium is provided comprising a computer program product according to the present invention.

Brief description of the Drawings

The invention will now be explained based on preferred embodiments thereof and by taking reference to the accompanying and schematical figures.

**Fig. 1** is a schematic block diagram for elucidating some basic aspects of a preferred embodiment of the method for monitoring the data quality of an EPG data set according to the present invention.

**Fig. 2** is a graphical representation for elucidating the time evolution of different quality measures which are obtained according to a method for monitoring the data quality of an EPG data set according to the present invention.

**Fig. 3** is a graphical representation for elucidating the time evolution of different quality measures which are obtained according to an embodiment of the a method for monitoring the data quality of an EPG data set according to the present invention taking into account a threshold feature.

**Fig. 4** is a graphical representation for elucidating the time evolution of a DQI value which are obtained according to a further embodiment of the method for monitoring the data quality of an EPG data set according to the present invention taking into account a derivative feature.

Detailed description of the Invention

In the following, similar functional and structural similar or equivalent element structures will be denoted with the same reference symbols. A detailed description of each feature will be repeated for subsequent occurrences in the following.

According to the present invention a method for measuring and/ or monitoring the data quality of an EPG data set is provided wherein a data quality index DQI is generated depending on and/or comprising at least one numerical value, wherein said numerical value is formed such as to represent a measure for at least one quality feature of at least one data entry of said EPG data set, and wherein said data quality index DQI is provided as a data quality measure for at least a subset of said EPG data set.

Said subset may be one of the group consisting of a subset of data stored in an EPG data base, a subset of data to be loaded into an EPG data base, and a subset of data to be exported from an EPG data base.

Said data quality index DQI may comprise at least one numerical value.

The data quality index DQI may for instance be given as a single numerical value. For example - as shown in some embodiments below - the data quality index DQI may be a non-negative numerical value describing a higher quality of the underlying EPG data by means of a larger numerical value: $DQI \in [0,\infty)$. This is however an example only. By accordingly adjusting the different numerical contributions, the weighting factors and/or by normalization its is also possible to have a DQI which is within a bounded interval $DQI \in [a,b]$ with any one of the following further conditions: $0 < a < b$, $a < \overline{0} < b$, $a < b < 0$ and $a,b$ being real numbers. Therefore, according to other embodiments the DQI may be negative. In addition, the DQI may either increase or decrease monotonically with increasing quality of the underlying EPG data.

A quality feature for a respective data entry of said EPG data set may be given as a numerical ranking value $r(m,n,e)$.

The quality feature may therefore e.g. be descriptive for the ranking of a certain data field, its data content or entry. its importance, and/or its relation to other data fields. E.g. a quality feature may represent the ranking or rankings of at least on of the group consisting of TV station/channel, genre of a respective audio/video content item, and the field as such.

The DQI may be calculated for a complete EPG data set, for instance for a complete EPG data base. The calculation may also be restricted to a certain subset of such an EPG data set or data base. The restriction may be given by a certain import and/or export of data to and from a given EPG data set or data base. The restriction may additionally or alternatively also be given with respect to certain and relevant channels, days, and fields of further information for a given audio and/or video content item.

The restriction may in each case explicitly be implemented by selecting and designing the data set with respect to which the DQI is determined. Additionally or alternatively, the restriction may be given implicitly by means of appropriately selected weighting factors or rankings.

Said data quality index DQI may be formed as a weighted sum of a plurality of elementary data quality indices $DQI_e$, in particular according to the following equation (I):

$$DQI := \sum_e \left( \alpha_e \cdot DQI_e \right), \qquad (I)$$

wherein DQI denotes the data quality index, $DQI_e$ denotes the elementary data quality index, $\alpha_e$ denotes the weighting factors and the sum is taken for all or for a subset of all elementary data quality indices counted by an index e.

Each of said elementary data quality indices $DQI_e$ may be descriptive for the data quality of data entries in said EPG data set related to a particular audio and/or video content item.

In the sense of the present invention the notion audio and/or video content item refers to audio content items, to audio and video content items, and to video content item. These audio and/or video content items may be certain broadcast transmission program items. In other applications these audio and/or video content items may be designed for transmission to mobile devices such as mobile phones, mobile personal digital assistants (PDAs), mobile mp3 player, media player, DVB services, DVBH services and the like.

Each of said elementary data quality indices $DQI_e$ may be formed as a weighted sum of field contributions fc (m,e) in said EPG data set, in particular according to the following equation (II):

$$DQI_e := \sum_m \left( \beta_{m,e} \cdot fc(m,e) \right), \qquad (II)$$

wherein $DQI_e$ denotes the elementary data quality index, $\beta_{m,e}$ denotes the weighting factor, $fc(m,e)$ denotes the respective field contribution, and the sum is taken for all or for a subset of all fields counted by an index m.

Each of said field contributions $fc(m,e)$ may be descriptive for the quality of data related to a data entry in a certain field for a particular audio and/or video content item.

Each field contribution $fc(m,e)$ may be formed as a product of weighted rankings $r(n,m,e)$ for the respective data field, in particular according to the following equation (III):

$$fc(m,e) := \prod_n \left( \gamma_{n,m,e} \cdot r(n,m,e) \right), \qquad (III)$$

wherein $fc(m,e)$ denotes the respective field contribution, $\gamma_{n,m,e}$ denotes the weighting factor, $r(n,m,e)$ denotes the ranking and the product is taken for all or for a subset of all ranking categories counted by an index n.

Said rankings $r(n,m,e)$ may comprise at least a fulfilment ranking describing whether a certain field contains meaningful data.

Whether a data entry for a field is meaningful or not may depend on kind of data which are expected for the respective field.

For a numerical field for which a numerical data entry is expected the fulfilment criteria may be satisfied and the data entry may be said to be meaningful if and only if a numerical value is contained in said numerical field.

For a character field for which a chain of characters - e.g. a text - is expected as a data entry the fulfilment criteria may be satisfied and the data entry may be said to be meaningful if and only if a chain of characters is contained in said character field. In addition, a length criterion may be added for such character fields, i.e. the fulfilment criteria may be satisfied and the data entry may be said to be meaningful if and only if the length of the contained chain of characters is within a range of values defined by a lower threshold value and/or by an upper threshold value.

For instance, the character chain for a field describing the title of an audio and/or video item may have up to 100 characters. The character chain for a field describing the content of an audio and/or video item may have at least 100 characters and up to 1000 characters. Outside the given ranges defined by the thresholds the respective fields would be classified a not fulfilling.

The upper and/or the lower threshold values may depend on the kind of field.

Additionally or alternatively, the upper and/or the lower threshold values may depend on the content of at least one other field for the same audio and/or video content item, for instance they may depend on the content of a genre field. One can also think of a dependence on the chosen application for the data set for which the DQI is determined.

Said fulfilment ranking may be set to zero if the respective field does not contain meaningful data or is empty and wherein said fulfilment ranking is set to a positive value otherwise, said positive value in particular representing the importance of the fulfilment property for the respective field for a particular audio and/or video content item.

Said weighted rankings $r(n,m,e)$ may comprise a field ranking describing the importance of a respective field or the importance of the quality of the EPG data for a respective field for a given audio and/or video content item.

The higher the field ranking is the more important the field and its quality are deemed to be.

Said weighted rankings $r(n,m,e)$ may comprise a TV station ranking, describing the importance of a respective TV station for a particular audio and/or video content item.

The higher the TV station ranking is the more important the TV station and its quality are deemed to be.

Said weighted rankings $r(n,m,e)$ may comprise a day/time offset ranking, describing the importance of a respective day/time offset for a particular audio and/or video content item.

The higher the day/time offset ranking is the more important the day/time offset and its quality are deemed to be.

The weighting factors $\gamma_{n,m,e}$ for a given field may depend on the kind of field.

The weighting factors $\gamma_{n,m,e}$ for a given field may depend on the content of at least one other field for the same audio and/or video content item.

The rankings $r(m,n,e)$ for a given field may depend on the kind of field.

The rankings $r(m,n,e)$ for a given field may depend on the content of at least one other field for the same audio and/or video content item.

The weighting factors $\gamma_{n,m,e}$ and/or said rankings $r(m,n,e)$ may depend on the content of a genre field for the same audio and/or-video content item.

For some applications it is very important that the field ranking is dependent on the genre of the audio and/or video content item. This means a movie dataset should have actors, a series dataset should have series number and so on. This means the ranking may depend on e.g. 9 main genres.

The importance, the weighting factors $\gamma_{n,m,e}$ and/or the rankings r(m,n,e) depend on the application the EPG data set or said respective subset thereof are designed for.

Importance may be derived from the intended application the EPG data are designed for, e.g. device applications which realize for instance EPG, categorisation, recording, search, and/or recommendations.

For a minimum EPG display e.g. start/stop time, title, channel are mandatory. Categorisation data are necessary for supporting genre sorting. VPS or running status are important for recording devices. Detail text - e.g. with respect to title and content - are important for search functionalities. In order realize recommendation engines data with respect to country, year, actors are necessary.

The importance of the field may be given by respective rankings dependent on which devices will be using the data set.

Channels be classified as A/B/C channels which as such or for which the quality of the EPG data are e.g. important, normal, unimportant. E.g. EPG data for a shopping channel may be unimportant, at least for some applications.

Each field contribution fc(m,e) may be formed according to the following equation (IV):

$$fc(m,e) := \frac{A}{TVStationRank} \cdot \frac{B}{FieldRank} \cdot \frac{C}{DayOffsetRank} \cdot (D \cdot Fulfilment), \qquad \text{(IV)}$$

wherein fc(m,e) denotes the respective filed contribution, *A,B,C,D* denote positive valued weighting factors, *TVStationRank* denotes the ranking of the respective TV station, *FieldRank* denotes the ranking of the respective data field, *DayOffsetRank* denotes the ranking of the day offset, and *Fulfilment* denotes a fulfilment factor with respect to the data field in question, in particular with *Fulfilment* $\in \{0,1\}$ .

As said data quality index DQI a global data quality index may be determined by forming respective weighted sums of elementary data quality indices $DQI_e$ for at least one of the group consisting of one or a group of TV stations, one or a group of days or time periods, one or a group of provider, one or a group of fields and one or a group of countries.

The data quality index DQI may calculated for a plurality of time instances in order to obtain said data quality index DQI as a function of time t. Thereby a process of monitoring the data quality index can be realized.

Said data quality index DQI may be determined before and/or after an import of raw data into said EPG data set or with respect to said imported raw data as such.

The data quality index DQI may determined and/or monitored for a subset of an EPG data set to be exported, e.g. to a particular application, device, user.

At least one of the first and the second time derivative of a data quality index DQI may be determined in order to describe the time dependency, evolution and the future trend of the quality of the underlying data of the EPG data set.

An alarm process may be initiated if at least one of the group consisting of said data quality index DQI, its first and second temporal derivatives and its respective absolute values exceed respective threshold values T1 from above or from below.

According to a further aspect of the present invention the data quality index DQI may be determined from at least two criteria, groups of quality features or quality features, the criteria, groups of quality features or quality features being weighted. The first criteria, group of quality features or quality feature may relate to a schedule of availability for an audio and/or video content item with respect to the current time/date. Said first criteria, group of quality features or quality feature may be relatively more highly weighted than the second and different criteria, group of quality features or quality feature in influencing a calculation of the data quality index DQI.

According to a further aspect of the present invention a system for monitoring the data quality of an EPG data set is provided which is adapted and which comprises means for carrying out a method for monitoring the data quality of an EPG data set according to the present invention.

Further, according to the present invention a computer program product is provided comprising computer program means which is adapted for realizing a method for monitoring the data quality of an EPG data set according to the present invention and the steps thereof when it is executed on a computer.

Also according to the present invention a computer readable storage medium is provided comprising a computer program product according to the present invention.

These and further aspects of the present invention will be further discussed in the following:

To ensure good quality and a mature EPG service it is critical to assure that the level of data quality delivered to the client devices is stable.

Therefore the data which is imported to the EPG system as well as the data which is exported from the system should be monitored on a continuous basis.

In the current solution the monitoring is implemented in a way that the EPG data is measured per import and export using a specified method which results in a numeric value, the data quality index or DQI.

The DQI is stored for all imports and export over the time and can be interpreted as a function over the time.

The DQI value can be used to trigger an alarm in case a defined threshold has been reached indicating that the overall data quality for this import or export has not sufficient quality.

In case the absolute value of the first derivation of this function is bigger than a specific threshold an alarm is triggered indicating that the data quality, related to an import or to an export for a specific network, has dropped or raised significant in a short period of time.

In case the absolute value of the second derivation of this function is bigger than a specified threshold an alarm is triggered indicating that the data quality, related to an import or to an export for a specific network, will drop or raise in the near future.

The problem to be solved is to enable an efficient and intelligent monitoring and alarm system analyzing the EPG metadata of hundreds of TV Channels for a plurality of transmission networks importing the data from a plurality of suppliers. The proposed alarm and monitoring system is automatic and does not need manual maintenance. The data quality is measured at a high level not concentrating on single fields of the metadata. The DQI also gives the possibility to react very early on changes in data quality which might occur in the future. This is achieved because also EPG data for the days to come (e.g. 14 days in advance) are taken into consideration when calculating the index.

Further, the DQI can be calculated independent from languages which might occur in some countries (e.g. Swiss).

To measure the data quality one single value the Data Quality Index DQI is computed.

The DQI can be computed for e.g.

• Suppliers (Imports) (mostly related to specific countries)

    * EPG data feeds (Exports) (mostly related to specific countries and networks (DVB-T/S/C; analogue), and internet via IPTV)
    The DQI can be computed on a certain interval e.g. daily.
    The DQI can be stored with the computation day, the import/export ID in a permanent storage e.g. database.

Monitoring / Alarm system:

The DQI value is compared with a specified threshold. In case the threshold has been reached alarm is initiated to indicate that the data quality is not sufficient.
The absolute value of the first derivation of the f(DQI) is compared against a threshold. In case the threshold has been reached alarm is initiated to indicate that the data quality is changing.
The absolute value of the second derivation of the f(DQI) is compared against a threshold. In case the threshold has been reached alarm is initiated to indicate that there will be a change in the data quality soon.
The f(DQI) could be displayed as a graph to give visual feedback.
Two approaches are possible.

• All programmes are treated same in the calculation
• All programmes are treated dependent on their format (News, Movie, Series,....)

The calculation can be based on following parameters.
TV Stations ranking: TV Stations are ranked(e.g. A/B/C; A := high importance country wide TV Station; B := regional or less important TV Station; C := unimportant TV Station.

Metadata field ranking: Fields are ranked due to their importance e.g. 'start time' and 'stop time' have highest priority. 'Original title' has lowest priority.

Day offset: Metadata which lies far in the future has lower priority e.g. Metadata for next week is not so important as metadata for today.

The parameters are weighted.

For all fields a fulfilment rule is implemented. A field is fulfilled when there is meaningful data for this field available.

The calculation takes all programmes from all TV Station for all days for this import or export into account. e.g. If the number of TV Stations in this feed increases the DQI will increase. The same applies for the number of days. If the fulfilment of fields is varying the DQI will also vary.

Example calculation:

```
For j in each of (all TV station IDs, program IDs)
      For k in each of (all days)
            DQI(j)(k) = 0
            For each of (all fields)
                  DQI(j)(k) = DQI(j)(k) + ((A/TVSTATIONRANK) * (B/FIELDRANK)
                  *(C/DAYOFFSET) * (D*FULFILMENT)) / (NOOFFIELDS)
A, B, C, D          := Multipliers to adjust weight of factors
A = 30; B = 30; C = 2; D = 1
```

To avoid misleading numbers only meaningful data has to be measured.

The DQI should be used for monitoring and supplier feedback. In case the DQI is changing over time the detailed reports must be evaluated to understand the reason.

The DQI may enable at least one of the following items:

• Measure the data quality,
• Monitor the data quality,
• Track the data quality,
• Visualize the data quality,
• Compare the data quality,
• Basis for supplier bonus system, and
• Evaluation of data quality enhancements.

In the following again reference is explicitly taken to the accompanying figures:

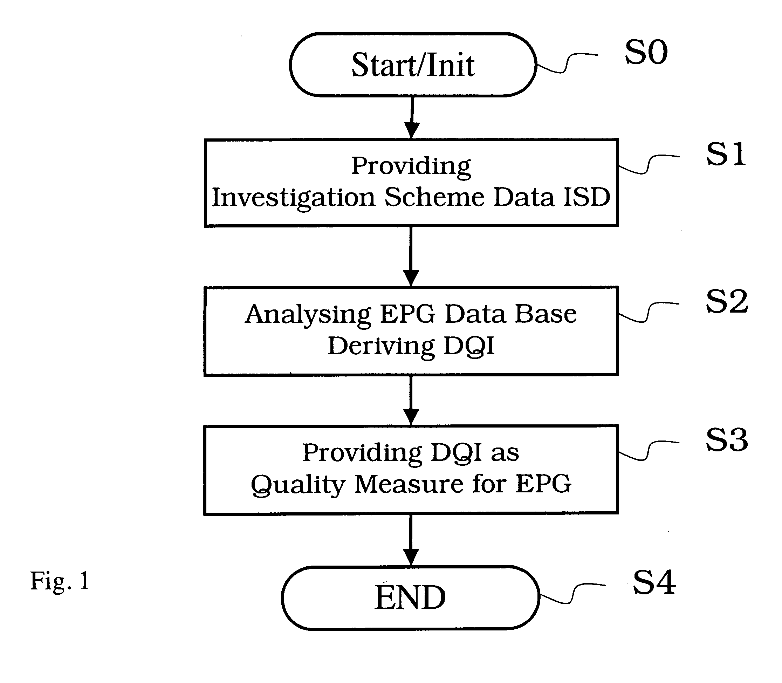

Fig. 1 is a schematical block diagram for elucidating an embodiment of the method for monitoring the data quality of an EPG data set according to the present invention.

After an initialization step S0 data ISD which are descriptive for an investigation scheme with respect to said EPG data set are provided in a first step S1.

Based on said investigation scheme data ISD in a second step S2 a given EPG data set or a part thereof is analyzed in order to derive a data quality index DQI which is descriptive for the quality of the data of said EPG data set or said part thereof.

In a third step S3 the derived data quality index DQI is provided as a quality measure for the data content of the EPG data set or as said part thereof.

Then the process is then terminated in the following step S4.

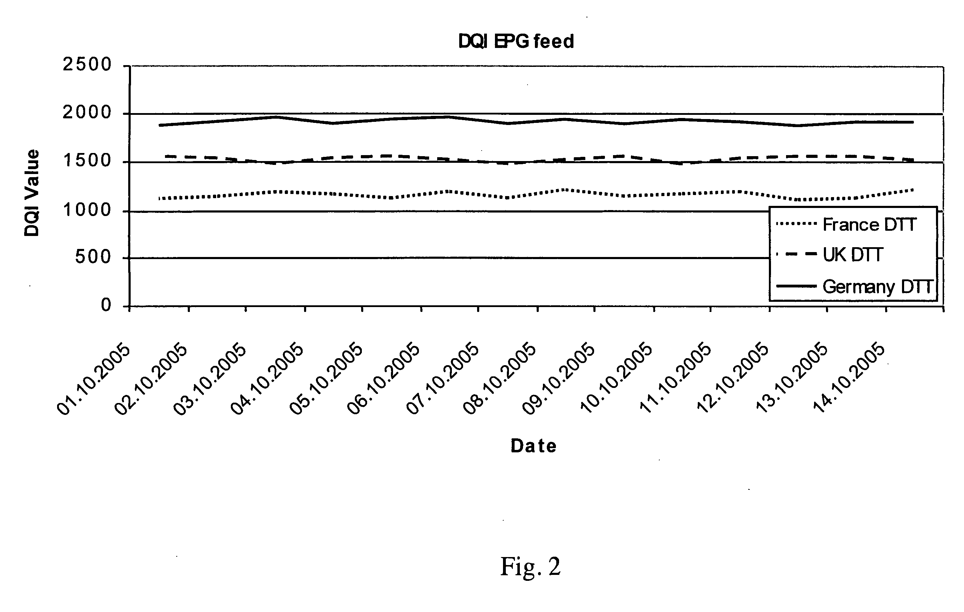

Fig. 2 is a graphical representation which demonstrates the time evolution of data quality indices DQI of different kind.

According to the present invention the data quality index DQI can be restricted to certain features of the underlying EPG data set, for instance it can be restricted to certain TV stations or as shown in Fig. 2 to certain raw data provider. The traces G, U, and F as given in Fig. 2 demonstrate the time evolution of the quality of the raw data stemming from different providers from Germany, the UK and France, respectively. As the absolute value of the data quality index DQI strictly correlates to the extent of the respective data base it is sometimes more important to observe the time variation of the respective traces and to ignore the absolute value as such unless other comparison reasons and comparison features are given.

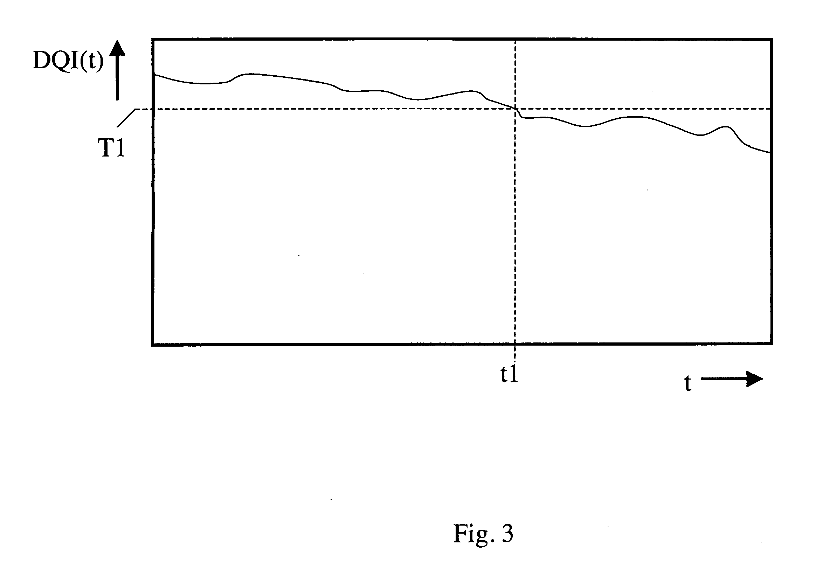

Fig. 3 is a graphical representation for elucidating an aspect of monitoring the quality measure in the sense of a data quality index DQI according to the present invention. In Fig. 3 the abscissa denotes the time and the ordinate denotes the value of the data quality index DQI. As can be seen from Fig. 3 the respective trace for the data quality index DQI shows some variation in time. After a certain period of time the value for the data quality index decreases below a given threshold T1 in which case according to the present invention a first alarm may be initiated in order to draw the attention of the user of the EPG data set to the effect that the respective value of the data quality index might show a decrease of the data quality in which case further investigations could be started. In this situation as shown in Fig. 3 the time variations as such are not large enough to be recognized by observing the first temporal derivative of the value DQI. However, even a slight time variation may yield over a period of time long enough a remarkable decrease in the quality indicated by a corresponding decrease of the DQI value below said first threshold T1.

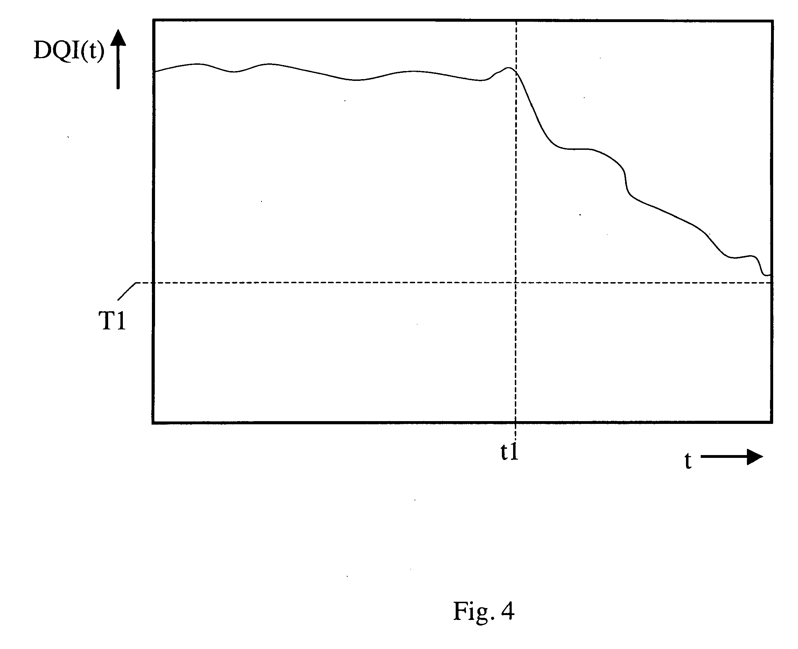

In the situation as described in the graphical representation of Fig. 4 the trace for the DQI value does not reach said first threshold T1 for a reasonable period of time, namely until t2. However already at t1 one can estimate the first temporal derivative of the trace of the DQI value in order to learn from the slope of the trace that in the future a decrease of the DQI value below the first threshold T1 might be expected. Therefore counter measures can be taken into account in advance before the quality of the data of the EPG data set as such decreases.

**Reference Symbols**

| | |
|---|---|
| **A** | Weighting factor |
| **B** | Weighting factor |
| **C** | Weighting factor |
| **D** | Weighting factor |
| **DQI** | Data quality index |
| **DQI$_e$** | Elementary data quality index |
| **EPG** | Electronic program guide |
| **fc** | Field contribution |
| **ISD** | Investigation scheme data |
| **r** | ranking |
| $\alpha$ | Weighting factor |
| $\beta$ | Weighting factor |
| $\gamma$ | Weighting factor |

**Claims**

1.  Method for measuring the data quality of an EPG data set,

    - wherein a data quality index (DQI) is generated in dependence upon at least one numerical value,
    - wherein said numerical value is determined such as to represent a measure for at least one quality feature of at least one data entry of said EPG data set, and
    - wherein said data quality index (DQI) is provided as a data quality measure for at least a subset of said EPG data set.

2.  Method according to claim 1 ,
    wherein said subset is one of the group consisting of a subset of data stored in an EPG data base, a subset of data to be loaded into an EPG data base, and a subset of data to be exported from an EPG data base.

3.  Method according to any one of the preceding claims,
    wherein said data quality index (DQI) comprises at least one numerical value.

4.  Method according to any one of the preceding claims,
    wherein a quality feature for a respective data entry of said EPG data set is given as a numerical ranking value (r (m,n,e)).

5.  Method according to any one of the preceding claims,
    wherein said data quality index (DQI) is formed as a weighted sum of a plurality of elementary data quality indices (DQI$_e$) according to the following equation (I):

$$DQI := \sum_{e} \left( \alpha_e \cdot DQI_e \right), \qquad \text{(I)}$$

wherein DQI denotes the data quality index, $DQI_e$ denotes the elementary data quality index, $\alpha_e$ denotes the weighting factors and the sum is taken for all or for a subset of all elementary data quality indices counted by an index e.

**6.** Method according to claim 5,
wherein each of said elementary data quality indices ($DQI_e$) is descriptive for the data quality of data entries in said EPG data set related to a particular audio and/or video content item.

**7.** Method according to any one of the preceding claims 5 or 6,
wherein each of said elementary data quality indices ($DQI_e$) is formed as a weighted sum of field contributions (fc (m,e)) in said EPG data set according to the following equation (II):

$$DQI_e := \sum_{m} \left( \beta_{m,e} \cdot fc(m,e) \right), \qquad \text{(II)}$$

wherein $DQI_e$ denotes the elementary data quality index, $\beta_{m,e}$ denotes the weighting factor, fc(m,e) denotes the respective field contribution, and the sum is taken for all or for a subset of all fields counted by an index m.

**8.** Method according to claim 7,
wherein each of said field contributions fc(m,e) is descriptive for the quality of data related to a data entry in a certain field for a particular audio and/or video content item.

**9.** Method according to any one of the preceding claims 7 or 8,
wherein each field contribution (fc(m,e)) is formed as a product of weighted rankings (r(n,m,e)) for the respective data field according to the following equation (III):

$$fc(m,e) := \prod_{n} \left( \gamma_{n,m,e} \cdot r(n,m,e) \right), \qquad \text{(III)}$$

wherein fc(m,e) denotes the respective filed contribution, $\gamma_{n,m,e}$ denotes the weighting factor, r(n,m,e) denotes the ranking and the product is taken for all or for a subset of all ranking categories counted by an index n.

**10.** Method according to claim 9,
wherein said rankings (r(n,m,e)) comprise at least a fulfilment ranking describing whether a certain field contains meaningful data according to respective fulfilment criteria.

**11.** Method according to any one of the preceding claims 9 or 10,
wherein for a numerical field for which a numerical data entry is expected the fulfilment criteria are satisfied if and only if a numerical value is contained in said numerical field.

**12.** Method according to any one of the preceding claims 9 to 11,
wherein for a character field for which a chain of characters is expected as a data entry the fulfilment criteria are satisfied if and only if a chain of characters is contained in said character field and if the length of the chain of characters is within a range of values defined by a lower threshold value and/or by an upper threshold value.

**13.** Method according to claim 12,
wherein the upper and/or the lower threshold values are depending on the kind of field.

**14.** Method according to any one of the preceding claims 9 to 11,

wherein the upper and/or the lower threshold values are depending on the content of at least one other field for the same audio and/or video content item.

15. Method according to any one of the preceding claims 9 to 14,

 - wherein said fulfilment ranking is set to zero if the respective field does not contain meaningful data or is empty and
 - wherein said fulfilment ranking is set to a positive value otherwise,
 - said positive value in particular representing the importance of the fulfilment property for the respective field for a given audio and/or video content item.

16. Method according to any one of the preceding claims 9 to 15, wherein said weighted rankings (r(n,m,e)) comprise a field ranking describing the importance of the quality of the EPG data for a respective field for a given audio and/or video content item.

17. Method according to claim 16. wherein the higher the field ranking is the more important the field and its quality are deemed to be.

18. Method according to any one of the preceding claims 9 to 17, wherein said weighted rankings (r(n,m,e)) comprise a TV station ranking describing the importance of the quality of the EPG data for a respective TV station for a given audio and/or video content item.

19. Method according to claim 18, wherein the higher the TV station ranking is the more important the TV station and its quality are deemed to be.

20. Method according to any one of the preceding claims 9 to 19, wherein said weighted rankings (r(n,m,e)) comprise a day/time offset ranking describing the importance of the quality of the EPG data for a respective day/time offset for a given audio and/or video content item.

21. Method according to claim 20, wherein the higher the day/time offset ranking is the more important the day/time offset and its quality are deemed to be.

22. Method according to any one of the preceding claims 9 to 21, wherein said weighting factors $\gamma_{n,m,e}$ for a given field are depending on the kind of field.

23. Method according to any one of the preceding claims 9 to 22, wherein said weighting factors $\gamma_{n,m,e}$ for a given field depend on the content of at least one other field for the same audio and/or video content item.

24. Method according to any one of the preceding claims 9 to 23, wherein said rankings (r(m,n,e)) for a given field depend on the kind of field.

25. Method according to any one of the preceding claims 9 to 24, wherein said rankings (r(m,n,e)) for a given field depend on the content of at least one other field for the same audio and/or video content item.

26. Method according to any one of the preceding claims 9 to 25, wherein said weighting factors $\gamma_{n,m,e}$ and/or said rankings (r(m,n,e)) depend on the content of a genre field for the same audio and/or video content item.

27. Method according to any one of the preceding claims 9 to 26, wherein the importance and said weighting factors $\gamma_{n,m,e}$ and/or said rankings (r(m,n,e)) depend on the application the EPG data set or said respective subset thereof are designed for.

28. Method according to any one of the preceding claims 8 to 27, wherein each field contribution (fc(m,e)) is formed according to the following equation (IV):

$$fc(m,e) := \frac{A}{TVStationRank} \cdot \frac{B}{FieldRank} \cdot \frac{C}{DayOffsetRank} \cdot \left(D \cdot Fulfilment\right), \qquad \text{(IV)}$$

wherein fc(m,e) denotes the respective filed contribution, $A,B,C,D$ denote positive valued weighting factors, *TVStationRank* denotes the ranking of the respective TV station, *FieldRank* denotes the ranking of the respective data field, *DayOffsetRank* denotes the ranking of the day offset, and *Fulfilment* denotes a fulfilment factor with respect to the data field in question, in particular with *Fulfilment* $\in \{0,1\}$.

29. Method according to any one of the preceding claims,
wherein as said data quality index (DQI) a global data quality index is determined by forming respective weighted sums of elementary data quality indices ($DQI_e$) for at least one of the group consisting of one or a group of TV stations, one or a group of days or time periods, one or a group of provider, one or a group of fields and one or a group of countries.

30. Method according to any one of the preceding claims,
wherein the data quality index (DQI) is calculated for a plurality of time instances in order to obtain said data quality index (DQI) as a function of time (t).

31. Method according to any one of the preceding claims,
wherein said data quality index (DQI) is determined before and/or after an import of raw data into said EPG data base or with respect to said imported raw data as such.

32. Method according to any one of the preceding claims,
wherein said data quality index (DQI) is determined and/or monitored for a subset of an EPG data set to be exported.

33. Method according to any one of the preceding claims,
wherein at least one of the first and the second time derivative of a data quality index (DQI) is determined in order to describe the time dependency, evolution and the future trend of the quality of the underlying data of the EPG data base.

34. Method according to any one of the preceding claims,
wherein an alarm process is initiated if at least one of the group consisting of said data quality index (DQI), its first and second temporal derivatives and its respective absolute values exceed respective threshold values (T1) from above or from below.

35. Method according to claim 1.

   - wherein the data quality index (DQI) is determined from at least two quality features, the quality features being weighted,
   - wherein first quality feature relates to a schedule of availability for an audio and/or video content item with respect to the current time/date, and
   - wherein said quality feature is relatively more highly weighted than the second and different quality feature in influencing a calculation of the data quality index (DQI).

36. System for monitoring the data quality of an EPG data set,
which is adapted and which comprises means for carrying out a method for monitoring the data quality of an EPG data set according to any one of the preceding claims 1 to 35.

37. Computer program product,
comprising computer program means which is adapted for realizing a method for monitoring the data quality of an EPG data set according to any one of the preceding claims 1 to 35 and the steps thereof when it is executed on a computer.

38. Computer readable storage medium,
comprising a computer program product according to claim 36.

EP 1 841 239 A1

```
          ╭─────────────────────╮
          │      Start/Init       │ ～ S0
          ╰─────────────────────╯
                     │
                     ▼
          ┌─────────────────────┐
          │      Providing       │ ～ S1
          │ Investigation Scheme Data ISD │
          └─────────────────────┘
                     │
                     ▼
          ┌─────────────────────┐
          │ Analysing EPG Data Base │ ～ S2
          │     Deriving DQI      │
          └─────────────────────┘
                     │
                     ▼
          ┌─────────────────────┐
          │    Providing DQI as   │ ～ S3
          │ Quality Measure for EPG │
          └─────────────────────┘
                     │
                     ▼
          ╭─────────────────────╮
          │         END           │ ～ S4
          ╰─────────────────────╯
```

Fig. 1

**DQI EPG feed**

Fig. 2

EP 1 841 239 A1

Fig. 3

EP 1 841 239 A1

Fig. 4

EP 1 841 239 A1

))) **European Patent Office**

**EUROPEAN SEARCH REPORT**

**Application Number**

EP 06 00 6850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/076380 A1 (MAGRAS ANDRE ET AL) 7 April 2005 (2005-04-07) | 1,3,5,6, 30,34, 36-38 | INV. H04N17/00 |
| Y | * paragraphs [0084], [0085], [0094] - [0096], [0116], [0117], [0119]; figures 7,8 * | 2,29 | |
| Y | US 5 576 755 A (DAVIS ET AL) 19 November 1996 (1996-11-19) * abstract * * column 8, line 45 - line 50 * * column 28, line 55 - column 29, line 48; figure 2 * | 2,29 | |
| A | US 2002/078440 A1 (FEINBERG BRIAN ET AL) 20 June 2002 (2002-06-20) | | |
| A | US 2003/197732 A1 (GUPTA JIMMY ROHIT) 23 October 2003 (2003-10-23) | | |
| | | | TECHNICAL FIELDS SEARCHED (IPC) |
| | | | H04N |

The present search report has been drawn up for all claims

| Place of search | Date of completion of the search | Examiner |
|---|---|---|
| The Hague | 4 September 2006 | Yvonnet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 6850

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2006

| Patent document cited in search report | | Publication date | Patent family member(s) | | Publication date |
|---|---|---|---|---|---|
| US 2005076380 | A1 | 07-04-2005 | CN | 1565134 A | 12-01-2005 |
| | | | WO | 03032651 A1 | 17-04-2003 |
| | | | EP | 1446959 A1 | 18-08-2004 |
| | | | FR | 2830402 A1 | 04-04-2003 |
| | | | MX | PA04002957 A | 05-07-2004 |
| US 5576755 | A | 19-11-1996 | AT | 246428 T | 15-08-2003 |
| | | | AT | 197865 T | 15-12-2000 |
| | | | AU | 700801 B2 | 14-01-1999 |
| | | | AU | 3970795 A | 23-05-1996 |
| | | | BR | 9509532 A | 30-09-1997 |
| | | | CA | 2203017 A1 | 09-05-1996 |
| | | | DE | 69519524 D1 | 04-01-2001 |
| | | | DE | 69519524 T2 | 17-05-2001 |
| | | | DE | 69531414 D1 | 04-09-2003 |
| | | | DE | 69531414 T2 | 01-04-2004 |
| | | | DK | 788713 T3 | 27-12-2000 |
| | | | EP | 0788713 A1 | 13-08-1997 |
| | | | ES | 2204445 T3 | 01-05-2004 |
| | | | ES | 2154351 T3 | 01-04-2001 |
| | | | GR | 3035412 T3 | 31-05-2001 |
| | | | HK | 1031796 A1 | 28-05-2004 |
| | | | JP | 2974784 B2 | 10-11-1999 |
| | | | JP | 10512692 T | 02-12-1998 |
| | | | PT | 788713 T | 31-05-2001 |
| | | | WO | 9613935 A1 | 09-05-1996 |
| US 2002078440 | A1 | 20-06-2002 | NONE | | |
| US 2003197732 | A1 | 23-10-2003 | NONE | | |

EPO FORM P0459

For more details about this annex : see Official Journal of the European Patent Office, No. 12/82